# EUROPÄISCHE PATENTSCHRIFT

(11) **EP 0 958 910 B1**
(45) Veröffentlichungstag und Bekanntmachung des Hinweises auf die Patenterteilung: **12.02.2003**
(21) Anmeldenummer: 99109855.9
(22) Anmeldetag: 19.05.1999
(51) Int. Cl.: B29C 47/88, B29C 47/92

(54) **Verfahren und Vorrichtung zum Herstellen einer Kunststoff-Folie**
Method and apparatus for manufacturing a plastic film
Procédé et dispositif de production d'un film plastique

(30) Priorität: 19.05.1998 DE 19822400
(43) Veröffentlichungstag der Anmeldung: 24.11.1999
(73) Patentinhaber: Graf von Montgelas, Max Joseph, 84175 Gerzen (DE); Finke, Udo, 65439 Bad Weilbach (DE)
(72) Erfinder: Finke, Udo, 84175 Gerzen (DE)
(74) Vertreter: Riederer Freiherr von Paar zu Schönau, Anton

(56) Entgegenhaltungen:
- EP-A- 0 041 803
- EP-A- 0 508 167
- EP-A- 0 522 487
- WO-A-91/14173
- DE-A- 19 543 289
- US-A- 5 368 460
- PATENT ABSTRACTS OF JAPAN vol. 013, no. 243 (E-768), 7. Juni 1989 (1989-06-07) & JP 01 044624 A (MATSUSHITA ELECTRIC WORKS LTD), 17. Februar 1989 (1989-02-17)

## Beschreibung

Die Erfindung bezieht sich auf ein Verfahren und eine Vorrichtung zum Herstellen einer ein- oder mehrschichtigen Kunststoff-Folie aus einem Kunststoff-Rohmaterial oder einer Kombination mehrerer solcher Materialien, das/die man aus einer Schlitzdüse extrudiert und anschließend unter Kristallisation des Folienmaterials abkühlen läßt, wobei man die extrudierte Folie während des Abkühlungsvorgangs über eine gegebene Weite durch eine Luftstrecke leitet und im Bereich der Luftstrecke mit einem Luftstrom, den man hinsichtlich Temperatur und Luftreinheit konditioniert hat, umspült, indem man ihn allseitig um die Folie herum ausblast, ihn in gleicher Richtung wie die durch ihn so eingehüllte Folie bewegt und ihn gegen Einflüsse von außen durch eine Trennwand abschirmt; die gattungsgemäße Vorrichtung, speziell für Blasfolie, weist einen Extruder - oder mehrere Extruder für eine mehrschichtige Folie -, ein Blaswerkzeug, eine Ringdüse und - von ihr eingeschlossen - Luftdüsen zur Bildung und Aufrechterhaltung einer Luftblase in der ausgestoßenen, schlauchförmigen Folie und ein Schutzgehäuse, das den an das Blaswerkzeug anschließenden Raum abkapselt, auf.

Die Herstellung von Folien erfolgt im allgemeinen im Blasverfahren oder im Gießverfahren. Ausgangsmaterial ist ein Kunststoffgranulat, das klassifizierte Eigenschaften aufweist, jedoch trotzdem von Charge zu Charge unterschiedliche Charakteristiken hat. Weiterhin kann sich das Rohmaterial in der Temperatur, der Feuchtigkeit und der Alterung unterscheiden. Unterschiede in der Material-, insbesondere der Molekularstruktur können zu unterschiedlicher Eigenwärmeentwicklung in einer Transportschnecke des Extruders führen, was wiederum das Ergebnis beeinflußt. Es ist bekannt, durch einen Konditionierer, der zwischen das Rohmaterialsilo und den Extruder eingeschaltet ist, den Materialzustand für den Vorgang passend einzustellen.

Die Qualität der schließlich entstandenen Folie wird beurteilt nach der Freiheit von Stippen, also Einschlüssen wie beispielsweise Gelkörpem, Fremdeinschlüssen und verbrannten Kunststoffablagerungen, nach der stoffmäßigen und dickenmäßigen Homogenität der Folie und nach der gleichmäßigen Transparenz, die sich als Indikator für die morphologische Struktur erwiesen hat Nach dem Stand der Technik werden, wenn sich entsprechend unbrauchbare Folienstrecken ergeben, diese vernichtet und wird versucht, die Parameter am Extruder nachzustellen.

Die eigentliche Formierung oder Kristallisation, also die Entwicklung der morphologischen Struktur des Folienmaterials, erfolgt dann nach dem Extrudieren, wenn der Kunststoff schon die Folienform hat, während des Abkühlens und Verfestigens der Folie. Um hier Störungen fernzuhalten, ist es bekannt, daß man die Folie im Bereich der Luftstrecke, die das Folienmaterial im Anschluß an die Schlitzdüse während des Abkühlvorgangs durchsetzt, mit einem konditionierten Luftstrom umspült, den man hinsichtlich Temperatur und Luftreinheit konditioniert hat, ihn allseitig um die Folie herum ausbläst, ihn in gleicher Richtung wie die durch ihn so eingehüllte Folie bewegt und ihn gegen Einflüsse von außen durch eine Trennwand abschirmt. Die Kristallisation des Folienmaterials in dieser Luftstrecke läuft nämlich andernfalls weitgehend unkontrolliert ab. Sowohl zusätzliche Wärmequellen als auch ein plötzlicher seitlicher kalter Luftzug oder ähnliche asymmetrische Einflüsse führen dazu, daß die Folie auf einer Schlauchseite schneller oder stärker schrumpft als auf der anderen, mit der Folge einer ungleichen Morphologie über den Umfang und in Extrusionsrichtung mit willkürlichen Eigenschaften wie ungleichmäßige Planlage, Transparenz und Bogenlauf. Durch die Umspülung dieses Bereichs der Luftstrecke mit einem konditionierten Luftstrom, zu dessen Konditionierung auch ein ungestörtes Strömen gehört, und dessen Abschirmung durch eine Kapselung bekommt man die Vorgänge während des Abkühlens des Folienmaterials in gewissem Umfang in den Griff.

Beispielsweise aus der US 5 368 460 A ist es bekannt, den Luftvorhang, der die vom Extruder ausgehende Blase umspült, mit einem flexiblen Folienvorhang zu umgeben und dadurch vor Luftzug zu schützen.

Die DE 44 05 463 A beschreibt eine vergleichbare Anlage, mit einer starren zylindrischen Trennwand, innerhalb derer konditionierte Kühtluft mit der aufsteigenden Blase in laminarer Strömung mitfließt.

Die Korrektur der Faktoren, die die Folienqualität beeinflussen, erweist sich trotzdem noch als überaus komplex.

Durch die Erfindung sollen die Möglichkeiten der Prozeßkontrolle bei der Folienherstellung verbessert werden. Hierzu unterteilt man entlang der Luftstrecke den Luftstrom in jeweils die Folie entlang einer Teilstrecke einhüllende Luft-Teilströme, die man in Strömungsrichtung hintereinander erzeugt und jeweils bei Beginn der nächsten Luft-Teilstrecke wieder abzieht. Demnach wird der Luitstrom entlang der Luftstrecke in Teil-Luftströme unterteilt, die jeweils die Folie, speziell den Folienschlauch, entlang einer Teilstrecke einhüllen und die in Strömungsrichtung hintereinander erzeugt werden. Zu Beginn des nächsten Luft-Teilstroms wird der vorhergehende wieder abgesaugt oder auch nach außen abgelenkt und abgeführt, beispielsweise zurückgeführt. Die Teil-Luftströme können also nach den örtlichen Erfordernissen des Schlauchs eingestellt werden, beispielsweise im untersten Abschnitt turbulent und in den oberen Abschnitten allseits gleichförmig laminar. Das erfindungsgemäße Verfahren kann an die laufende und möglichst flächendeckende Messung charakteristischer Produkteigenschaften der abgekühlten fertigen Folie anknüpfen, und hierbei insbesondere ihrer Transparenz, die man mit einem optischen Meßsystem abtastet; und man führt es so aus, daß man die Produktwerte der abgekühlten fertigen Folie laufend mißt und durch Steuern von Einflußgrößen in den Luft-Teilströmen entlang der Folien-Herstellstrecke in Abhängigkeit von den gemessenen Werten in Echtzeit regelt. Diese Einflußgrößen können auch zusätzlich die Konditionierung des Rohmaterials betreffen, diese Regelung ist aber mit der gestaffelten Luftumspülung und der Kapselung kombiniert. Man erhält darüber hinaus eine Einflußmöglichkeit, die eine Regelung mit geschlossener Regelschleife beispielsweise unter laufender Überwachung der Folientransparenz ermöglicht.

Als Vorrichtung zur Durchführung des Verfahrens wird, soweit es sich um die Herstellung von Blasfolien handelt, speziell die Konstruktion bevorzugt, daß durch das Schutzgehäuse der an das Blaswerkzeug anschließende Raum, in dem die Abkühlung der extrudierten Folie erfolgt, umschlossen und gekapselt ist und sich dort im Bereich der Kunststoff-Ringdüse eine diese Ringdüse umgebende Luft-Ausblasdüsenanordnung befindet, die an eine Luft-Konditionierstation anschließt und eine Ausblasrichtung im wesentlichen parallel zur Extrusionsrichtung der Kunststoff-Ringdüse hat, wobei sich im Abstand von der die Kunststoff Ringdüse umgebenden Luft-Ausblasdüsenanordnung eine zu dieser Düsenanordnung im wesentlichen koaxiale Luft-Absaugdüsenanordnung zum Absaugen des von der Ausblasdüsenanordnung ausgeblasenen, die Folie umspülenden Luftstroms angeordnet ist, wobei die Vorrichtung dadurch gekennzeichnet ist, daß in dem an das Blaswerkzeug anschließenden, vom Schutzgehäuse engräumig umschlossenen Raum entlang der vom extrudierten Schlauch umgebenen Achse der Kunststoff-Ringdüse eine Mehrzahl von koaxial hierzu angeordneten jeweils einander paarweise zugeordneten Luft-Ausblasdüsenanordnungen und -Absaugdüsenanordnungen liegen und diese Düsenanordnungspaare jeweils im wesentlichen lückenlos aneinander anschließen.

Die Konditionierung des Luftstroms soll speziell für die Eigenschaften der Temperatur und der Luftreinheit, insbesondere der Reinheit von Partikeln und Keimen, sowie der Feuchtigkeit erfolgen.

Beim Herstellen von Blasfolie hat der Folienschlauch, bis er flachgelegt und aufgewickelt wird, eine Luftstrecke von mehreren Metern, bei großen Anlagen beispielsweise 10m, zurückgelegt Als Dimensionierung eines Kapselgehäuses sei beispielhaft angegeben, daß bei einem Durchmesser der Ringdüse von d der entstehende und abkühlende Folienschlauch einen Durchmesser von etwa 4d haben kann und das umgebende zylindrische Kapselgehäuse dann mit einem Durchmesser von 12d zweckmäßig dimensioniert ist. Die Unterteilung kann dann in z. B. 5 Teil-Luftströme durchgeführt sein. Bei kleineren Anlagen ist ein schmalerer Luftstromraum ausreichend, bei größeren Anlagen ist naturgemäß auch der Luftstromraum größer und können in diesem auch noch weitere Installationsteile enthalten sein, wie beispielsweise Laufgitter für das Personal.

Die Regelung der Charakteristiken der hergestellten Folie, insbesondere deren Transparenz, beeinflußt getrennt für die Teil-Luftströme die Konditionierungseigenschaften der Luft des Luftstroms und die Stärke und Geschwindigkeit des Luftstroms. Zusätzlich kann die Regelung auch die Konditionierung und den Transport des Rohmaterials, insbesondere den Extrusionsdruck, die Temperatur und die Feuchtigkeit, wovon wiederum die Viskosität der Kunststoffschmelze abhängt, beeinflussen.

Weitere Einzelheiten, Vorteile und Weiterbildungen der Erfindung ergeben sich aus der folgenden Beschreibung eines bevorzugten Ausführungsbeispiels unter Bezugnahme auf die Zeichnung. Es zeigen:

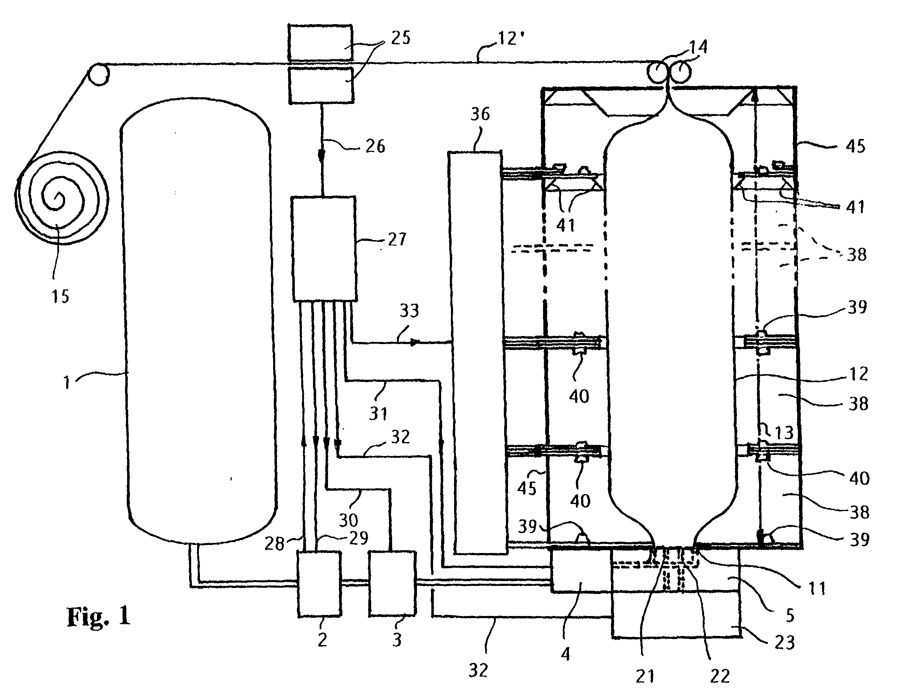

- Fig. 1: in schematischer Darstellung eine Anlage zur Herstellung von Blasfolien gemäß der Erfindung;
- Fig. 2: einen Schnitt durch einen Teil der Anlage gemäß einer erweiterten Ausführung.

In der dargestellten Anlage wird aus einem Silo 1 Kunststoffgranulat über eine Meßund Konditioniereinrichtung 2 und eine Einrichtung 3 zur Eingangsdosierung über einen Extruder 4 zu einem Blaswerkzeug 5 geleitet. Im Extruder 4 wird das Material aufgeschmolzen und unter Druck vorwärtsbewegt zu einer Ringdüse 11 im Blaswerkzeug, die das Material in zunächst zäher flüssiger Form ringförmig ausstößt und über ein Abzugssystem und durch Aufblasen einen stehenden Schlauch 12 erzeugt, der stetig nach oben abgezogen wird und gleichzeitig abkühlt und sich verfestigt. Nach Durchlaufen einer ausreichenden Strecke in Luft ist der Verfestigungsvorgang ausreichend fortgeschritten, daß der Schlauch durch Walzen 14 flachgedrückt und weiter zu einer Wickelstation 15 geleitet wird.

Die - auch für mehrschichtige Folien zu verwendende - Ringdüse 11 ist in bekannter, in der Zeichnung nicht im einzelnen dargestellter Weise von einem Kühlring umgeben und hat ein Venturi-Profil, das eine Druckverteilüng bewirkt, die die Schlauchwand nach außen zieht und gegenüber dem Durchmesser der Ringdüse 11 eine Durchmesservergrößerung bewirkt und den Schlauch stabilisiert Innerhalb der Ringdüse 11 befinden sich ein Innenkühlsystem mit einer Luft-Blasdüse 21 und eine Luft-Saugdüse 22, die den Schlauch 12 in aufgeblähtem säulenartigem Zustand halten. Die Schlauch-Innenluft muß aus Gründen der Wärmeabführung laufend ausgetauscht werden. Die Düsen 21 und 22 sind über entsprechende Leitungen mit einer Luftförder- und Konditioniereinrichtung 23 verbunden, die den Innendruck im Schlauch 12 und den Zustand der dort vorhandenen Luft in gegebenen Wertbereichen hält.

Der den Spalt zwischen den Walzen verlassende, nun flachgefaltete Schlauch 12' durchläuft eine Prüfstation 25, die nach verschiedenen Techniken, insbesondere nach einer Kapazitätsprüfung und einer mit Hilfe einer Rasterkamera durchgeführten Transparenzprüfung die Charakteristiken und die Homogenität der hergestellten Folie laufend kontrolliert und die entsprechenden Meßwerte als Signale über eine Leitung 26 an ein Datenverarbeitungssystem (DV-System) 27 abgibt Das DV-System 27 empfängt weiterhin über eine Leitung 28 Meßwerte, die den Zustand des Kunststoffgranulats anzeigen, und gibt nach Verarbeitung der an sie übergebenen Werte über eine Leitung 29 Befehle an die Meß- und Konditioniereinrichtung 2 zur Konditionierung, beispielsweise Vortrocknung, des Kunststoffgranulats, über eine Leitung 30 Befehle an die Einrichtung 3 zur Eingangsdosierung und über eine Leitung 31 Befehle an den Extruder 4, der in Abhängigkeit von diesen Befehlen die Temperatur des aufgeschmolzenen Kunststoffs bestimrnt, der an die Ringdüse 11 gegeben wird. Über eine Leitung 32 beeinflußt die Regelung 27 die Luftförder- und Konditioniereinrichtung 23, um insbesondere den Innendruck des Schlauchs 12, aber auch die sonstigen Zustände der im Schlauch 12 befindlichen Luft in gegebenen Grenzen zu halten.

Weiterhin gibt die Regelung 27 über eine Leitung 33 Befehle an eine Luftförder- und Konditioniereinrichtung 36. Die Einflußnahme der Regelung 27 beschränkt sich hier nämlich nicht auf die Zuführung des Rohmaterials zur Ringdüse 11, sondern umfaßt auch die Vorgänge in der Wand des Schlauchs 12, nämlich die Abkühlung und die dabei stattfindende Kristallisation. Hierzu sollen in der Umgebung des Schlauchs 12 gleichmäßige und auf die Vorgänge in den jeweiligen Abschnitten des Schlauchs 12 angepaßte Bedingungen geschaffen werden. Die Luftsfrecke ist in einzelne Teilluftstrecken 38 unterteilt, die jeweils in ringförmiger Anordnung um den Schlauch 12 eine Reihe von Ausblasdüsen 39 am jeweils unteren Ende und eine Reihe von Absaugdüsen 40 oder Abweisblenden 41 am oberen Ende aufweisen. Die Düsenanordnungen sind jeweils mit der Luitförder- und Konditioniereinrichtung 36 verbunden, die die Gegebenheiten der Luftströme in den Teilluftstrecken, also den Luftdurchsatz und die Strömungsgeschwindigkeit, die Lufttemperatur und die Luftfeuchtigkeit usw. passend einstellt. Zur Führung der Luftströme in den Teilluftstrecken 38 und zur Abschirmung gegen äußere Einflüsse, die insbesondere in größeren Halten sehr stark und störend sein können, sind der Schlauch 12 und die Luftstrecken 38 sowie die Anordnungen der Düsen 39, 40 bzw. der Blenden 41 durch ein zylindrisches Gehäuse 45 abgeschlossen und gekapselt. Die Vorgänge in der Schlauchwand spielen sich also in einem vollkommen ungestörten Milieu ab.

Aufgrund der Unterteilung der Luftstrecke in die Teifluftstrecken 38, die hinsichtlich ihres Teilluftstroms jeweils getrennt steuerbar sind, können in Abhängigkeit vom Material und den sonstigen Parametern für jede Teilstrecke die passenden Bedingungen vorgesehen und erzeugt werden. Die Kristallisation kann deshalb jedenfalls im Sinne einer vollständigen Homogenität gesteuert, aber auch hinsichtlich der Foliencharakteristiken optimiert werden.

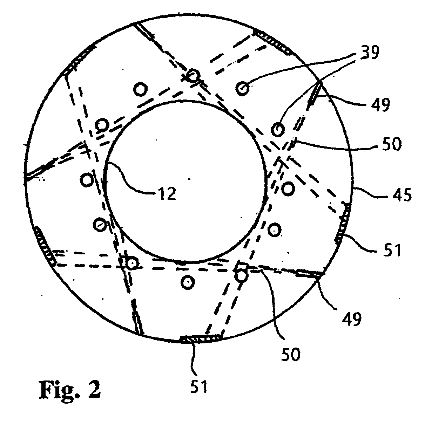

In Fig. 2 ist eine noch weitergehende Differenzierung des Verfahrens und der Vorrichtung angedeutet. In dem durch eine Teilluftstrecke gelegten Schnitt sind unten die Ausblasdüsen 39 erkennbar. Dazwischen liegen Anordnungen von Strahlenquellen 49, die Strahlenbündel 50 in einem spitzen Raumwinkel emittieren, und gegenüberliegend Empfängerraster 51 angeordnet, die die Strahlenbündel 50 empfangen und ein Signal abgeben, das den Schatten des Schlauchs 12 anzeigt. Derartige Anordnungen von Strahlenquellen 49/Empfängerrastern 51 sind in verschiedenen Höhen im Gehäuse 45 installiert. Die Ergebnisse der Empfängerraster 51 werden an die Regelung 27 übermittelt, die eventuelle Laufabweichungen der Schlauchwand hierdurch sofort erkennt Bei dieser Ausführung sind die verschiedenen Ausblasdüsen 39 einer gemeinsamen Teifluftstrecke 38 zumindest hinsichtlich Durchsatzrate und Luft-Fließgeschwindigkeit getrennt steuerbar, so daß Unsymmetrien sofort gegengesteuert werden kann.

## Patentansprüche

1. Verfahren zum Herstellen einer Kunststoff-Folie (12') aus einem oder mehreren kombinierten Kunststoff-Rohmaterialien, das/die man aus einer Schlitzdüse extrudiert und anschließend unter Kristallisation des Folienmaterials abkühlen läßt, wobei man die extrudierte Folie (12) während des Abkühlungsvorgangs über eine gegebene Weite durch eine Luftstrecke leitet und im Bereich der Luftstrecke mit einem Luftstrom, den man hinsichtlich Temperatur und Luftreinheit konditioniert hat, umspült, indem man ihn allseitig um die Folie herum ausbläst, ihn in gleicher Richtung wie die durch ihn so eingehüllte Folie bewegt und ihn gegen Einflüsse von außen durch eine Trennwand (45) abschirmt, **dadurch gekennzeichnet, daß** man entlang der Luftstrecke den Luftstrom in jeweils die Folie (12) entlang einer Teilstrecke einhüllende Luft-Teilströme (38) unterteilt, die man in Strömungsrichtung hintereinander erzeugt und jeweils bei Beginn der nächsten Luft-Teilstrecke wieder abzieht.

2. Verfahren nach Anspruch 1, **dadurch gekennzeichnet, daß** man das/die Kunststoff-Rohmaterial(ien) schlauchartig aus einer Ringdüse (11) eines Blaswerkzeugs (5) extrudiert und innerhalb des extrudierten Schlauchs eine Luftsäule aufrechterhält, wobei man den extrudierten Schlauch (12) außenseitig mit den Luft-Teilströmen (38) umspült und den extrudierten Schlauch mit den Luft-Teilströmen durch ein Ringgehäuse (45) abschirmt.

3. Verfahren nach Anspruch 1 oder 2, **dadurch gekennzeichnet, daß** man die Produktwerte der abgekühlten fertigen Folie (12') laufend mißt und durch Steuern von Einflußgrößen entlang der Folien-Herstellstrecke (2, 3, 4, 38) in Abhängigkeit von den gemessenen Werten in Echtzeit regelt, wobei man bei der Regelung als Einflußgrößen auch die Konditionierung, Stärke und Geschwindigkeit den Luft-Teilströme (38) in Abhängigkeit von den gemessenen Produktwerten steuert.

4. Verfahren nach Anspruch 3, **dadurch gekennzeichnet, daß** man als einen der Produktwerte die Transparenz der Folie laufend abtastet und die ermittelten Werte zur Regelung heranzieht.

5. Vorrichtung zur Herstellung durch Blasformen einer Kunststoff-Folie aus einem oder mehreren kombinierten Kunststoff-Rohmaterialien, das/die extrudiert und anschließend unter Kristallisation des Folienmaterials abgekühlt wird/werden, wobei die extrudierte Folie (12) während des Abkühlungsvorgangs über eine gegebene Weite eine Luftstrecke durchsetzt, insbesondere zur Durchführung des Verfahrens nach Anspruch 2, mit einem Extruder (4) und einem Blaswerkzeug (5), das eine Kunststoff-Ringdüse (11) und - von ihr eingeschlossen - Luftdüsen (21, 22) zur Bildung und Aufrechterhaltung einer Luftblase in der ausgestoßenen, schlauchförmigen Folie (12) aufweist, und mit einem Schutzgehäuse (45), durch das der an das Blaswerkzeug (5) anschließende Raum, in dem die Abkühlung der extrudierten Folie (12) erfolgt, umschlossen und gekapselt ist und in dem sich im Bereich der Kunststoff-Ringdüse (11) eine diese Ringdüse umgebende Luft-Ausblasdüsenanordnung (39) befindet, die an eine Luft-Konditionierstation (23, 36) anschließt und eine Ausblasrichtung im wesentlichen parallel zur Extrusionsrichtung der Kunststoff-Ringdüse hat, wobei sich im Abstand von der die Kunststoff-Ringdüse (11) umgebenden Luft-Ausblasdüsenanordnung (39) eine zu dieser Düsenanordnung im wesentlichen koaxiale Luft-Absaugdüsenanordnung (40) zum Absaugen des von der Ausblasdüsenanordnung ausgeblasenen, die Folie umspülenden Luftstroms angeordnet ist, **dadurch gekennzeichnet, daß** in dem an das Blaswerkzeug (5) anschließenden, vom Schutzgehäuse (45) engräumig umschlossenen Raum entlang der vom extrudierten Schlauch (12) umgebenen Achse der Kunststoff-Ringdüse (11) eine Mehrzahl von koaxial hierzu angeordneten jeweils einander paarweise zugeordneten Luft-Ausblasdüsenanordnungen (39) und -Absaugdüsenanordnungen (40) liegen und diese Düsenanordnungspaare jeweils im wesentlichen lückenlos aneinander anschließen.

## Claims

1. Method for manufacturing a plastic film (12') from one or more combined plastic raw materials that are extruded from a slot nozzle and then allowed to cool with chemical formation of the film material, with the extruded film (12) passing through an air section for a given distance during the cooling process, in the zone of air section is flushed with an air stream that has been conditioned for temperature and air purity, by subjecting the film to blowing an all sides, the air stream being moved in the same direction as the film encapsulated by it, and shielding it against outside influence by a partition (45), **characterized in that**, along the air section, the air stream is divided into partial air streams (38) each enclosing the film (12) along a partial section, said partial air streams being produced in succession in the flow direction and each being drawn off again at the beginning of the next partial air section.

2. Method according to Claim 1, **characterized in that** the plastic raw material(s) is/are extruded in the shape of a hose from an annular nozzle (11) of a blow mould (5), with an air column being maintained inside the extruded hose, the extruded hose (12) being flushed externally with the partial air streams (38) and being shielded, together with the partial air streams, by an annular housing (45).

3. Method according to claim 1 or 2, **characterized in that** the product values of the cooled finished film (12') are continuously measured and closed-loop controlled in real time by controlling the influential parameters along the film production line (2, 3, 4, 13) as a function of the measured values, in such control as influential parameters also conditioning, intensity and speed of the partial air streams (38) being controlled in dependency of the measured product values.

4. Method according to Claim 3, **characterized in that** the transparency of the film is continually scanned as one of the product values and the values obtained are used for the control.

5. Device for producing, by blow moulding, a plastic film from one or more combined plastic raw materials that are extruded and then are cooled with chemical formation of the film material, the extruded film (12) passing through an air section during the cooling process for a certain distance, especially for carrying out the method according to Claim 2, the device comprising an extruder (4) and a blow mould (5) that has a plastic annular nozzle (11) and - enclosed by it - air nozzles (21, 22) for forming and maintaining an air volume in the extruded hose-shaped film (12), and comprising a protective housing (45) by which the chamber adjacent to the blow mould (5), in which the cooling of the extruded film (12) takes place, is surrounded and encapsulated and wherein, in the vicinity of plastic annular nozzle (11), an air-blowing nozzle arrangement (39) surrounding this annular nozzle is located, said arrangement abutting an air-conditioning station (23, 36) and having a blowing direction essentially parallel to the extrusion direction of the plastic annular nozzle, and wherein at a distance from the air-blowing nozzle arrangement (39) surrounding the plastic annular nozzle (11), an air suction nozzle arrangement (40) essentially coaxial with this nozzle arrangement is provided to draw away the air stream blown out by the blowing nozzle arrangement and flushing the film, **characterized in that** within the chamber which is adjacent to the blow mould (5) and is sungly enclosed by the protective housing (45), along the axis of plastic annular nozzle (11), said axis being surrounded by the extruded hose (12), a plurality of air-blowing nozzle arrangements (39) and suction nozzle arrangements (40) are located coaxially to said axis and pairwise with respect to one another, and these pairs of nozzle arrangements each abut one another essentially without any gaps.

## Revendications

1. Procédé de fabrication d'une feuille de plastique (12') à partir d'un ou de plusieurs matériaux plastiques bruts extrudé(s) par tuyère à fente avec ensuite refroidissement avec cristallisation du matériau de feuille, la feuille extrudée (12) étant dirigée pendant le refroidissement sur un canal de soufflage d'une certaine largeur, alimenté dans le canal de soufflage par un courant d'air conditionné pour la température et la pureté de l'air, la feuille étant soufflée sur chaque face et ce courant d'air passent dans la même direction que la feuille enveloppant par ce courant, et ce courant d'air étant protégé des influences extérieures par une cloison de séparation (45), **caractérisée en ceci que** le long du canal de soufflage, le courant d'air est divisé entre des courants d'air partiels (38) chaque enveloppant la feuille (12) le long d'une section partielle, les courants d'air partiels créés successivement dans le sens du courant d'air en cascade, chaque courant d'air partiel étant évacué avant le début de la section partielle suivant.

2. Procédé selon la revendication 1, **caractérisé en ceci que** le/les matériel/aux plastiques bruts sont extrudés en tuyau par une tuyère circulaire (11) d'un outil de soufflage (5), une colonne d'air étant établie à l'inférieur du tuyau extrudé, le tuyau extrudé (12) étant balayé à l'extérieur par les courants d'air partiels (38) et étant protégé, avec les courants d'air partiels, par un carter circulaire (45).

3. Procédé selon la revendication 1 ou 2, **caractérisé en ceci que** les valeurs de fabrication de la feuille confectionnée refroidie (12') sont contrôlées en permanence et sont réglées en temps réel le long de la ligne de fabrication des feuilles (2, 3, 4, 38) en fonction des valeurs mesurées par piloter des paramètres, en réglant les paramètres à piloter en fonction des valeurs mesurées sur le produit comportant aussi le conditionnement, la puissance et la vitesse des courants d'air partiels (38).

4. Procédé selon la revendication 3, **caractérisé en ceci que** pour l'une des valeurs de fabrication mesurées, on balaie permanent de transparence de la feuille, les valeurs obtenues étant utilisées pour le réglage.

5. Dispositif pour la fabrication d'une feuille plastique par moulage par soufflage sur un ou plusieurs matériaux plastiques bruts combinés extrudés et ensuite refroidis à cristallisation du matériel de feuille, la feuille extrudée (12) passant par un canal d'air de largeur définie pendant le refroidissement, en particulier pour la réalisation du procédé selon la revendication 2, avec une extrudeuse (4) et un outil de soufflage (5) présentant une tuyère circulaire à plastique (11) et, à l'intérieur de celle-ci, des tuyères d'air (21, 22) pour la formation et le maintien d'une bulle d'air dans la feuille éjectée en tuyau (12), et avec un carter de protection (45) entourant et formant enceinte l'espace en aval de l'outil de soufflage (5) où a lieu le refroidissement de la feuille extrudée (12) et dans lequel, à la hauteur de la tuyère circulaire à plastique (11), se trouve une architecture de tuyère de soufflage d'air (39) entourante cette tuyère circulaire, raccordée à un poste de conditionnement de l'air (23, 36) et présentant une direction de soufflage, parallèle pour l'essentiel au sens d'extrusion de la tuyère circulaire à plastique, une disposition de tuyère d'aspiration de l'air (40) pour l'aspiration du courant d'air soufflé par la tuyère de soufflage et enveloppant la feuille étant prévue dans une distance de l'architecture de la tuyère de soufflage d'air enveloppante (39) entourante la tuyère d'air circulaire (11), **caractérisée en ceci que** dans l'espace clos en aval de l'outil de soufflage (5) et enserré étroitement par le carter de protection (45), le long de l'axe de tuyère circulaire (11) enveloppée par le tuyau extrudé (12), il existe plusieurs configurations de tuyères de soufflage d'air (39) et de configurations de tuyères d'aspiration d'air (40) disposées deux par deux en position coaxiale par rapport à cet axe, et que ces couples de tuyères forment pour l'essentiel une suite continue.
